# EUROPEAN PATENT APPLICATION

(11) **EP 1 876 096 A2**
(43) Date of publication of application: **09.01.2008**
(21) Application number: 07111611.5
(22) Date of filing: 03.07.2007
(51) Int. Cl.: B64D 13/02, F16K 1/22

(54) **Electric Motor Pressure Relief Plate**

(30) Priority: 06.07.2006 US 481767
(71) Applicant: Honeywell International Inc., Morristown, NJ 07962 (US)
(72) Inventor: Denike, Stuart, Phoenix AZ Arizona AZ 85048 (US); Jira, Joseph J., Laveen, AZ 85339 (US); Sugai, Maureen, Phoenix, AZ 85048 (US); Atkins, Don J., Chandler, AZ 85224 (US); Sleeper, Robert D., Laveen, AZ 85339 (US)
(74) Representative: Haley, Stephen

(57) **Abstract**

A relief plate (116) is provided for coupling a housing of an electromechanical actuator assembly (138) to a valve housing of a valve assembly (118). The relief plate (116) includes a first side (142), a second side (144), an opening (140), an annular collection channel (152), and a plurality of grooves (154). The first side (142) is configured to couple to the actuator housing (138). The second side (144) is configured to couple to the valve housing (118). The opening (140) extends between the first and the second sides (142, 144). The annular collection channel (152) is formed in the second side (144) concentric to and in communication with the opening (140). The plurality of grooves (154) is formed in the second side (144) in communication with and extending radially outwardly from the channel (152). The grooves (154) are configured to direct liquid radially outwardly, and at least one groove (154) has a portion thereof configured to prevent the liquid from traveling radially inwardly.

## Description

The present invention relates to an electric motor, such as a motorized valve assembly and, more particularly, to a relief plate for use on the motorized valve assembly.

An air distribution system may be used to direct air from one portion of an aircraft to another. In some aircraft configurations, the air distribution system includes an inlet duct that receives air from an air source and two or more outlet ducts that exhaust the received air to a desired area within the aircraft, such as, for example, to an aircraft cabin or an underfloor section of the aircraft. Conventionally, a flow splitter is positioned between the inlet and outlet ducts to distribute the air between the two or more outlet ducts.

The flow splitter typically includes a motorized valve assembly that includes a valve assembly coupled to an actuator assembly. The valve assembly functions as a dynamic seal and is made up of a valve housing, a shaft, and a butterfly plate. The valve housing is disposed between the two or more ducts and includes at least one shaft opening through which an end of the shaft extends. The butterfly plate is configured to open and close the valve assembly in response to actuation of the shaft; thus, the butterfly plate is disposed in the valve housing and is coupled to a portion of the shaft. The shaft extends through an opening of the actuation assembly and couples to actuation components that are housed therein. The components are sealed from ambient by an o-ring disposed in the actuation assembly opening. During operation, when the valve is closed, the air circulates through a first system that includes the inlet duct and one of the outlet ducts. Similarly, when the valve is open, the air circulates through a second system that includes the inlet duct and another one of the outlet ducts.

Although the above assembly performs adequately, it may have drawbacks. For example, typically, air flows through the ducts at a higher pressure relative to air that flows around the actuation assembly. The air may contain moisture, and consequently, liquid may collect in the valve assembly and leak through the valve housing shaft opening. Because the motorized valve assembly is currently configured such that the valve assembly provides a dynamic seal and the o-ring provides an environmental seal, the liquid may travel along the shaft into the actuation assembly, enter the actuation assembly, and damage the actuation components housed therein. Additionally, in some instances, debris may build up on some exposed portions of the motorized valve assembly, such as on the actuation assembly. To remove the debris, some aircraft maintenance crews may use highly pressurized water. In these cases, the water may inadvertently enter into the actuation assembly through the environmental seal.

Hence, there is a need for a system that drains liquid out of the motorized valve assembly, while preventing liquid outside of the assembly from entering. Moreover, there is a need for a system that is relatively inexpensive and simple to implement. Additionally, it is desirable for the system to be capable of being retrofitted into existing motorized valve assemblies.

The present invention provides an actuator assembly that is configured to actuate a shaft that extends through a valve housing. The actuator assembly includes an actuator housing and a relief plate. The actuator housing includes an inner surface, an outer surface, an opening, and a plate mount surface. The opening extends between the inner and outer surfaces and is configured to receive the shaft therein. The plate mount surface is disposed on the outer surface. The relief plate includes a first side, a second side, an opening, and at least one side wall. The first side is coupled to the actuator housing. The opening extends between the first and second sides and is configured to receive the shaft therein. The second side is configured to couple to the valve housing and includes an annular collection channel and a plurality of grooves. The annular collection channel is formed concentric to and in communication with the opening, and the plurality of grooves in communication with the annular collection channel and extending radially outwardly. At least one groove is configured to direct liquid radially outwardly and has an inlet and an outlet. The inlet is in communication with the annular collection channel, and the outlet is formed on a corresponding side wall and is configured to prevent liquid from traveling radially inwardly when the relief plate second side is coupled to the valve housing.

In another embodiment, and by way of example only, a motorized valve assembly is provided for disposal in an aircraft. The motorized valve assembly includes a valve assembly, an actuator assembly, and a relief plate. The valve assembly comprises a valve housing, a shaft, and a plate. The valve housing has an inner surface, an outer surface, and an opening formed therebetween, the inner surface defines a passage, and the outer surface includes a plate mount surface. The shaft extends across at least a portion of the passage and through the opening. The plate is coupled to the shaft. The actuator assembly is configured to actuate the shaft and move the plate and includes an actuator housing including an inner surface, an outer surface, and an opening. The opening extends between the inner and outer surfaces and is configured to receive the shaft therein, and the outer surface includes a plate mounting section. The relief plate includes a first side, a second side, an opening, and at least one side wall. The first side is coupled to the actuator housing plate mounting section, the opening extends between the first and second sides and is configured to receive the shaft therein, and the second side is configured to couple to the valve housing plate mounting section and includes an annular collection channel and a plurality of grooves. The annular collection channel is formed concentric to and in communication with the opening. The plurality of grooves extends radially outwardly therefrom, and each groove has an inlet and an outlet. The inlet is in communication with the annular collection channel, and the outlet is formed on a corresponding side wall. The plurality of grooves are oriented such that liquid drains out of at least one groove when the motorized valve assembly is tilted at a predetermined attitude, and at least one groove is configured to prevent liquid from traveling radially inwardly when the relief plate second side is coupled to the valve housing.

In yet another embodiment, and by way of example only, a relief plate is provided for coupling a housing of an electro-mechanical actuator assembly to a valve housing of a valve assembly. The relief plate includes a first side, a second side, an opening, an annular collection channel, and a plurality of grooves. The first side is configured to couple to the actuator housing. The second side is configured to couple to the valve housing. The opening extends between the first and the second sides. The annular collection channel is formed in the second side concentric to and in communication with the opening. The plurality of grooves is formed in the second side in communication with and extending radially outwardly from the channel. The grooves are configured to direct liquid radially outwardly, and at least one groove has a portion thereof configured to prevent the liquid from traveling radially inwardly.

Other independent features and advantages of the preferred relief plate will become apparent from the following detailed description, taken in conjunction with the accompanying drawings which illustrate, by way of example, the principles of the invention.

### IN THE DRAWINGS

FIG. 1 is a simplified schematic diagram illustrating an exemplary air distribution system disposed within an aircraft;

FIG. 2 is a perspective view of an exemplary motorized valve assembly that may be implemented into the air distribution system shown in FIG. 1;

FIG. 3 is a cross section view of the exemplary motorized valve assembly shown in FIG. 2; and

FIG. 4 is a close up view of a portion of the exemplary motorized valve assembly shown in FIG. 3;

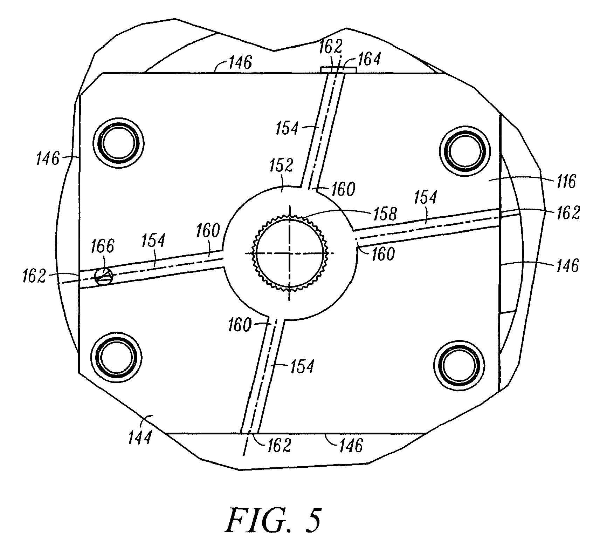

FIG. 5 is a cross section view of the exemplary motorized valve assembly shown in FIG. 3 taken along line 5-5.

The following detailed description of the invention is merely exemplary in nature and is not intended to limit the invention or the application and uses of the invention. Furthermore, there is no intention to be bound by any theory presented in the preceding background of the invention or the following detailed description of the invention.

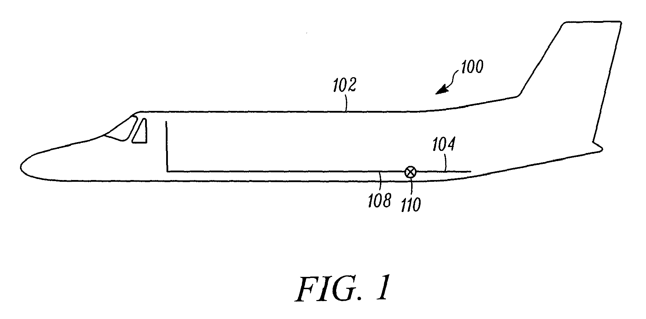

FIG. 1 is a simplified schematic diagram illustrating an air distribution system 100 disposed within an aircraft 102. The air distribution system 100 includes an inlet duct 104, an outlet duct 108, and a motorized valve assembly 110 positioned in duct 108. The inlet duct 102 receives air from an air source, such as, for example, engine bleed air, and the outlet duct 108 exhausts air into desired sections of the aircraft 102. In one exemplary embodiment, the outlet duct 108 exhaust airs into an aircraft underfloor. It will be appreciated that although one outlet duct 108 is depicted herein, more outlet ducts may be incorporated into the system 100. The motorized valve 110 directs air to the outlet duct 108 by opening or closing in response to the presence or absence of a pressure differential across the valve 110 that exceeds a predetermined value.

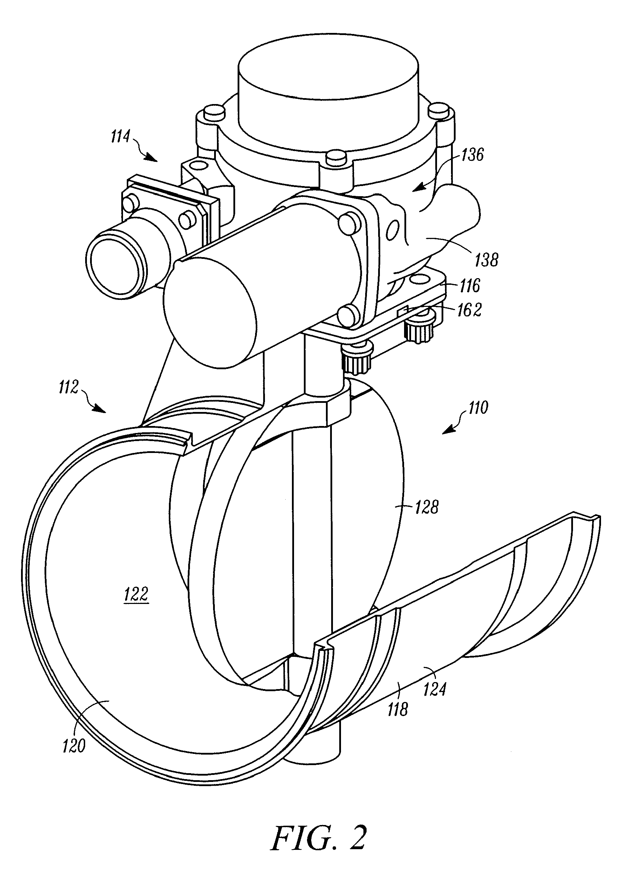

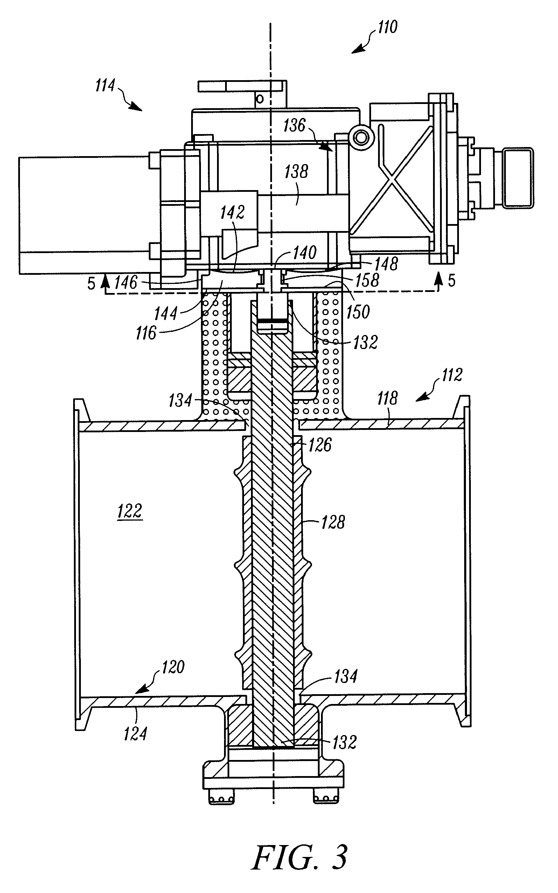

Turning now to FIGs. 2 and 3, an embodiment of a particular physical implementation of the motorized valve assembly 110. The motorized valve assembly 110 includes a valve assembly 112, an actuator assembly 114, and a relief plate 116. The valve assembly 112 is configured to be disposed between and direct air through the duct 108 (shown in FIG. 1), and includes a valve housing 118. The valve housing 118 has an inner surface 120 that defines an air passage 122, and an outer surface 124. The valve housing 118 is further configured to house a shaft 126, and a valve plate 128..

The shaft 126 extends across the air passage 122 and has ends 132 that extend through openings 134 formed in the valve housing 118. Additionally, the valve plate 128 is mounted to the shaft 126 to thereby block and unblock the air passage 122 in response to actuation thereof. Actuation of the shaft 126 is controlled by the actuation assembly 114. In particular, the actuation assembly 114 includes a plurality of actuation components 136 which are disposed in an actuation housing 138, and a portion of the shaft 126 extends through an opening 140 of the actuation housing 138 to couple to the actuation components 136.

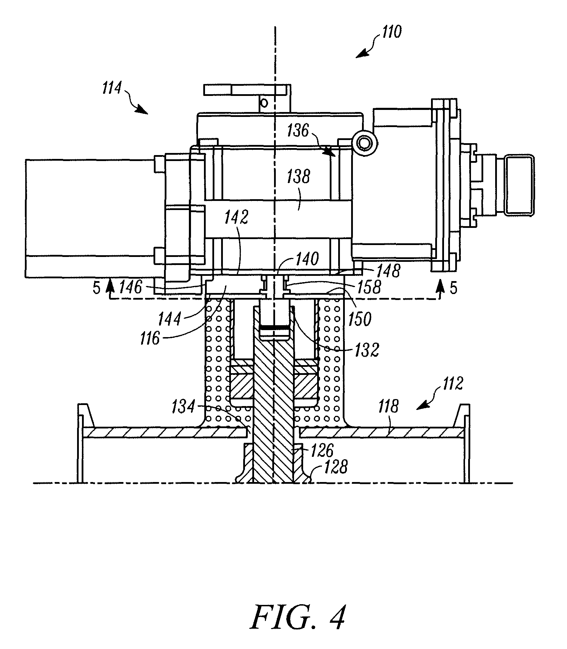

In some cases, liquid may accumulate in the air passage 122 and may leak through the valve housing 118 out one of the valve housing openings 134. Consequently, the liquid may travel along the shaft 126 through the actuation housing opening 140. To prevent the liquid from reaching the actuation housing opening 140, the relief plate 116 is included. With reference to FIGs. 3 and 4, the relief plate 116 has a first side 142, a second side 144, and a plurality of side walls 146. The first side 142 is configured to be mounted to a mount surface 148 on a portion of the outer surface of the actuator housing 138, while the second side 144 is configured to be mounted to a mount surface 150 on a portion of the valve housing outer surface 124. A shaft opening 158 extends between the first and second sides 142, 144 to receive the shaft 126 therethrough.

The second side 144 includes an annular collection channel 152 and a plurality of grooves 154. The annular collection channel 152 collects liquid that may be present along the shaft 126 and is thus disposed concentric to the shaft opening 158 and communicates therewith. The plurality of grooves 154 are formed in the second side 144 and each extends radially outwardly from, and includes an inlet 160 that communicates with and receives liquid that may be present in, the annular collection channel 152. Each groove 154 also includes an outlet 162 that is formed at a corresponding one of the plurality of side walls 146. The outlet 162 is preferably sized to allow the collected liquid traveling radially outwardly along the groove 154 to be directed out of the motorized valve assembly 110 and to prevent liquid from being directed radially inwardly when the relief plate 116 is coupled to the valve housing 118. In some embodiments, a cap 164 may be coupled to the outlet 162 to further prevent entry of liquid. It will be appreciated that any one of the plurality of grooves 154 may include the cap 164. In other embodiments, a check valve 166 may be included on one or more of the grooves 154. In this regard, the check valve 166 is preferably disposed and configured to allow liquid to pass radially outwardly, while preventing liquid from passing radially inwardly. In still other embodiments, an air pressure source (not shown) may be provided to force air or liquid radially outwardly along the grooves 154.

Some or all of the grooves 154 may have uniform or non-uniform depths or may be linear or non-linear. In embodiments in which a non-uniform depth is included, the deepest section of the groove 154 may be used to trap the liquid. In these cases, the liquid may be removed from the groove 154 using any suitable technique, such as by supplying a suitable magnitude of air pressure from the air pressure source (not shown). Non-linear grooves 154 may have a spiral or other non-linear shape. It will be appreciated that the grooves 154 may have any suitably shaped cross section, such as square-shaped, or U-shaped. Although four grooves 154 are shown in FIG. 4, more or fewer grooves may alternatively be employed. The grooves 154 are preferably disposed such that at least one groove 154 directs liquid radially outwardly no matter the attitude of the motorized valve assembly 110. For example, as few as two grooves 154 may be sufficient in some circumstances. Additionally, adjacent grooves 154 preferably radiate outwardly at a substantially equal distance from each other. The grooves 154 may have uniform or non-uniform radial cross-sectional areas along their lengths. It will be appreciated that the radial cross-sectional areas of the grooves 154 may be smaller in embodiments in which an air pressure source is provided.

There has now been provided a motorized valve assembly 110 that drains liquid, while preventing more liquid from entering therein. Specifically, the grooves 154 are sized and configured to prevent entry into the assembly 110. In some embodiments, the grooves 154 are not pressurized relative to the spaces therearound so that the surface tension of liquid itself also prevents entry thereof into the grooves 154. Moreover, modifications to include the above-described relief plate 114 in prior art valve assemblies are relatively inexpensive and simple to implement. In addition, existing motorized valve assemblies may be easily retrofitted with the configurations described above.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An actuator assembly (114) configured to actuate a shaft (126) that extends through a valve housing (118), the actuator assembly (114) comprising:
an actuator housing (138) including an inner surface, an outer surface, an opening (140), and a plate mount surface (148), the opening (140) extending between the inner and outer surfaces and configured to receive the shaft (126) therein, and the plate mount surface (148) disposed on the outer surface; and
a relief plate (116) including a first side (142), a second side (144), an opening (140), and at least one side wall (146), the first side (142) coupled to the actuator housing (138), the opening (140) extending between the first and second sides (142, 144) and configured to receive the shaft (126) therein, the second side (144) configured to couple to the valve housing (118) and including an annular collection channel (152) and a plurality of grooves (154), the annular collection channel (152) formed concentric to and in communication with the opening (140), and the plurality of grooves (154) in communication with the annular collection channel (152) and extending radially outwardly, at least one groove (154) configured to direct liquid radially outwardly having an inlet (160) and an outlet (162), the inlet (160) in communication with the annular collection channel (152), and the outlet (162) formed on a corresponding side wall (146) and configured to prevent liquid from traveling radially inwardly when the relief plate second side (144) is coupled to the valve housing (118).

2. The actuator assembly (114) of claim 1, wherein the groove (154) has square-shaped cross-section.

3. The actuator assembly (114) of claim 1, wherein the adjacent grooves (154) radiate outwardly at a substantially equal distance from one another.

4. The actuator assembly (114) of claim 1, wherein the grooves (154) extend substantially linearly from the inlet (160) to the outlet (162).

5. The actuator assembly (114) of claim 1, wherein the grooves (154) extend substantially non-linearly from the inlet (160) to the outlet (162).

6. The actuator assembly of claim 5, wherein each groove is spiral-shaped.

7. The actuator assembly (114) of claim 1, wherein at least one groove (154) has a length having a non-uniform depth.

8. The actuator assembly (114) of claim 1, further comprising:
a check valve (166) disposed in at least one of the grooves (154) to allow liquid to flow radially outwardly thereacross and to prevent liquid from flowing radially inwardly thereacross.

9. The actuator assembly (114) of claim 1, further comprising:
a cap (164) coupled to an outlet (162) of at least one groove (154).
